Europäisches Patentamt

European Patent Office

Office européen des brevets

(11) Publication number : **0 506 629 A1**

# (12) EUROPEAN PATENT APPLICATION

(21) Application number : **92830143.1**

(22) Date of filing : **24.03.92**

(51) Int. Cl.⁵ : **B65G 59/10, B65G 59/04**

(30) Priority : **28.03.91 IT MI910850**

(43) Date of publication of application :
**30.09.92 Bulletin 92/40**

(84) Designated Contracting States :
**AT BE CH DE DK ES FR GB GR IT LI LU MC NL PT SE**

(71) Applicant : **C.M.S. COSTRUZIONI MACCHINE SPECIALI S.r.l.**
**Via Privata C. Battisti 1**
**I-20122 Milano (IT)**

(72) Inventor : **Anghileri, Gianmario**
**Via Valle Scura 1**
**I-22040 Malgrate (COMO) (IT)**

(74) Representative : **Righetti, Giuseppe**
**Bugnion S.p.A. Via Carlo Farini, 81**
**I-20159 Milano (IT)**

(54) **An apparatus for taking out a container at a time from a stack of confectionery containers and feeding it to an operating area for use.**

(57)   An apparatus for taking a container at the time out of a stack of confectionery containers and feeding it to an operating area for use comprises an extractor body (18) exhibiting a side wall (19) and a bottom wall (20) the shapes of which match the shape of the container (5), the extractor body (18) being movable in a vertical direction and adapted to penetrate from top the concavity of the upper container (5) of a container pack (4), first air suction means (22) adapted to make the upper container (5) adhere by vacuum to the extractor body (18) and second air suction means (25) adapted to hold from bottom the containers (5) located under the upper container.

FIG.1

Jouve, 18, rue Saint-Denis, 75001 PARIS

EP 0 506 629 A1

The present invention relates to an apparatus for taking a container at a time out of a stack of confectionery containers and feeding it to an operating area for use.

It is known that above all in the confectionery industry containers known to those skilled in the art as "bun cases" are used, which are made of smooth or pleated paper or thin paperboard and into which the doughy material to be baked is introduced.

These containers are supplied in the form of stacks of packs, in each pack the containers being in turn stacked closely in contact with one another. There is therefore a great demand not only for an apparatus capable of automatically transferring and feeding the ban cases to the operating areas where they are to be used, but also and above all for an apparatus capable of automatically separating each of them from the remaining ones forming the pack.

For the purpose apparatus have been devised the task of which is to takee out a pastry container at a time from groups of stacked containers.

According to a known machine of this type, the containers are disposed so that the concavity thereof faces downwardly. A suction cup means is raised as far as it penetrates the lowermost container of a stack, resting on the bottom wall thereof. By creating the partial vacuum inside the suction cup means, the lower container is caused to adhere to said suction cup means that, by moving downwardly, enables it to become separated from the remaining containers and be subsequently transferred onto a conveyer or a conveying table.

The above described machine however often draws out two or more containers simultaneously because the latter are too closely penetrated into each other, also due to the weight of the containers overlying the lower container.

In other apparatus of a known type, attempts have been made to overcome the above described drawbacks by disposing the confectionery containers so as to have their concavity facing upwardly and housing at least the lowermost container of a stack in a plate provided with a through hole the shape of which substantially matches the shape of the container itself, and is therefore of truncated conical form.

Compressed air in the form of a laminar flow is sent thereto through suitable ducts so as to form a separation air cushion between the lower container and the overlying ones that are locked by appropriate clamps. A suction cup means is caused to adhere by vertical movement from bottom to the outer face of the bottom wall of the lower container which is therefore drawn out and transferred by the suction cup means itself.

However this appartus too has some limits above all related to the steadiness of the container during the withdrawing and transferring steps because, since it is seized externally by the bottom wall, it may be overturned and hence become useless, being impossible at this point to fill it with doughy material.

Under this situation, the technical task underlying the present invention is to devise an apparatus for taking a container at a time out of a stack of confectionery containers and feeding it to an operating area for use, which apparatus is capable of substantially eliminating the above drawbacks.

Within the scope of this technical task, it is an important object of the invention to devise an apparatus which is very reliable as regards both the separation of each container from the remaining ones and the steadiness of the container position during each step involving the displacemnt thereof.

The technical task mentioned and the object specified are substantially attained by an apparatus for taking a container at a time out of a stack of confectionery containers and feeding it to an operating area for use, comprising a magazine means for storing said containers disposed to form a stack and gathered in packs that are in turn stacked, a device for separating each pack from said storage magazine means, a transferring member designed to transfer each pack individually from said storage magazine means to a withdrawing area, and an extractor device designed to take out the containers one at a time, characterized in that said extractor device comprises an extractor body exhibiting a side wall and a bottom wall the shapes of which match the concavity of said container, said extractor body being movable in a vertical direction and adapted to penetrate from top the concavity of the upper container of a container pack, first air suction means adapted to make said upper container adhere by partial vacuum to said extractor body, locking means adapted to hold downwardly the containers located under said upper container, and transferring means for said upper container, acting on said extractor body and designed to transfer said container to an operating area for use.

The description of a preferred embodiment of an apparatus for talking a container at a time out of a stack of confectionery containers and feeding it to an operating area in accordance with the invention is given hereinafter by way of non-limiting example with reference to the accompanying drawings, in which:

– Fig. 1 is a front elevation view of the apparatus of the invention;

– Fig. 2 is a partly sectional view of the components of the device for taking each container out individually;

– Fig. 3 shows the magazine means for storing the container packs;

– Fig. 4 diagrammatically shows a means for transferring the individual containers from the withdrawing area to the operating area for use; and

– Fig. 5 is a view taken along line V-V in Fig. 4.

Referring to the drawings, an apparatus for taking a container at a time out of a stack of confectionery containers and feeding it to an operating area in accordance with the present invention is generally identified by reference numeral 1.

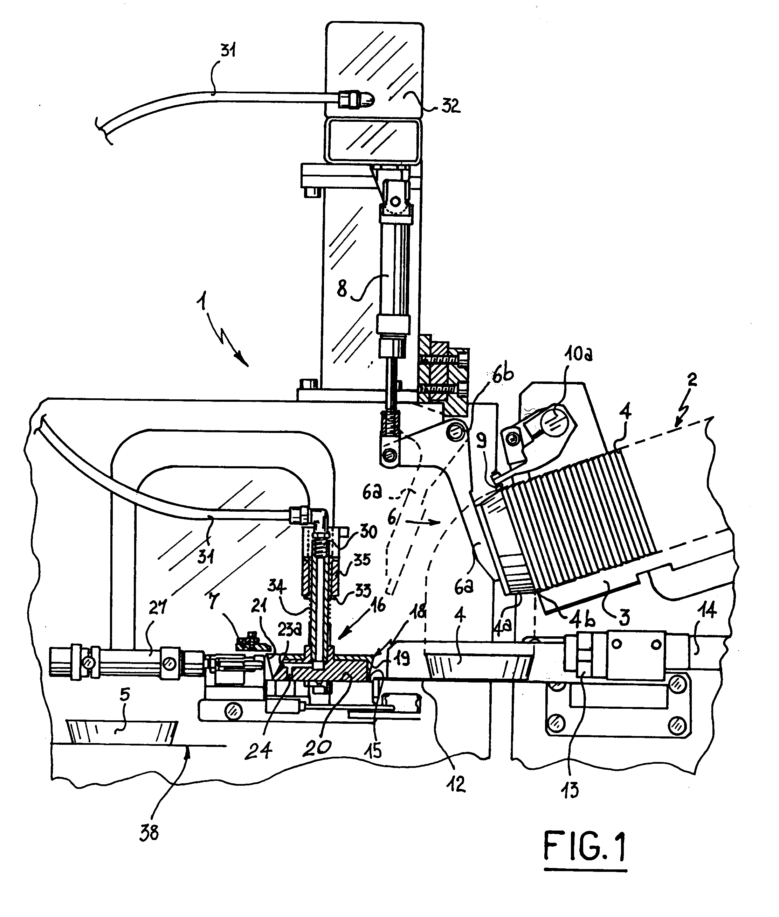

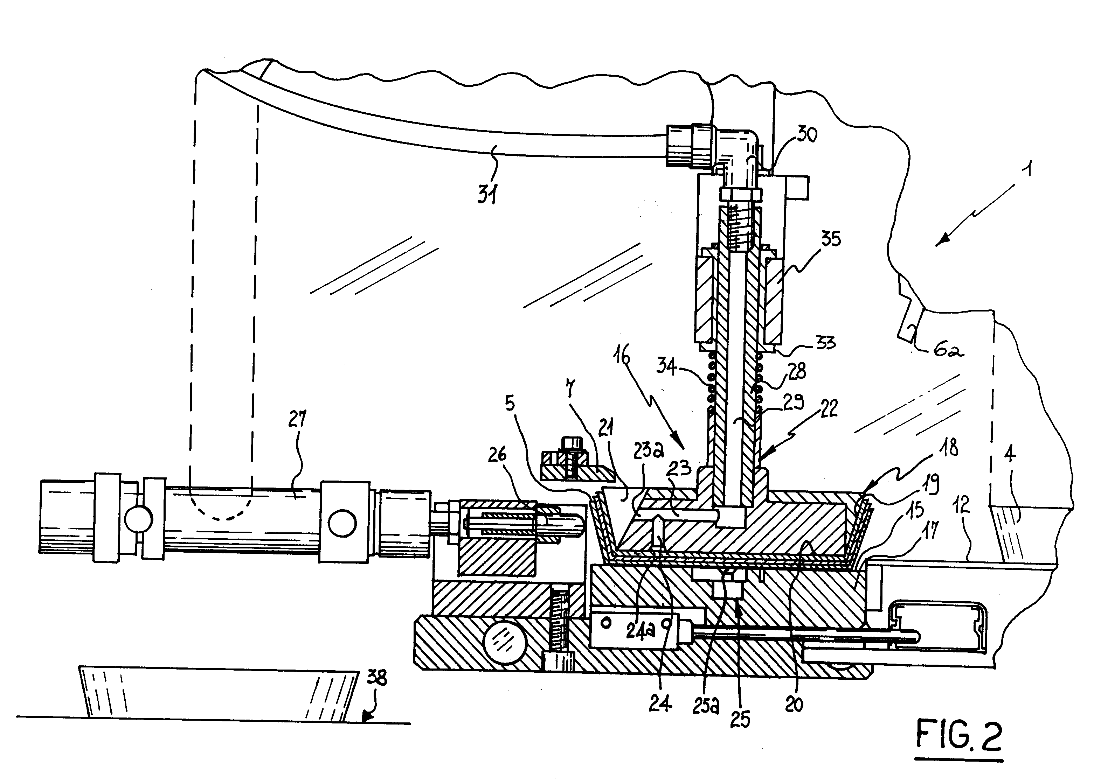

It comprises a storage magazine means 2 consisting of guides 3 inclined to the horizontal and along which a plurality of confectionery containers or bun cases 5 (Fig. 2) runs downwardly under gravity, said bun cases being stacked into each other so that they have their concavity turned substantially upwardly. More particularly, the containers 5 are gathered to form packs 4 (Figures 1 and 2) that in turn are stacked into each other.

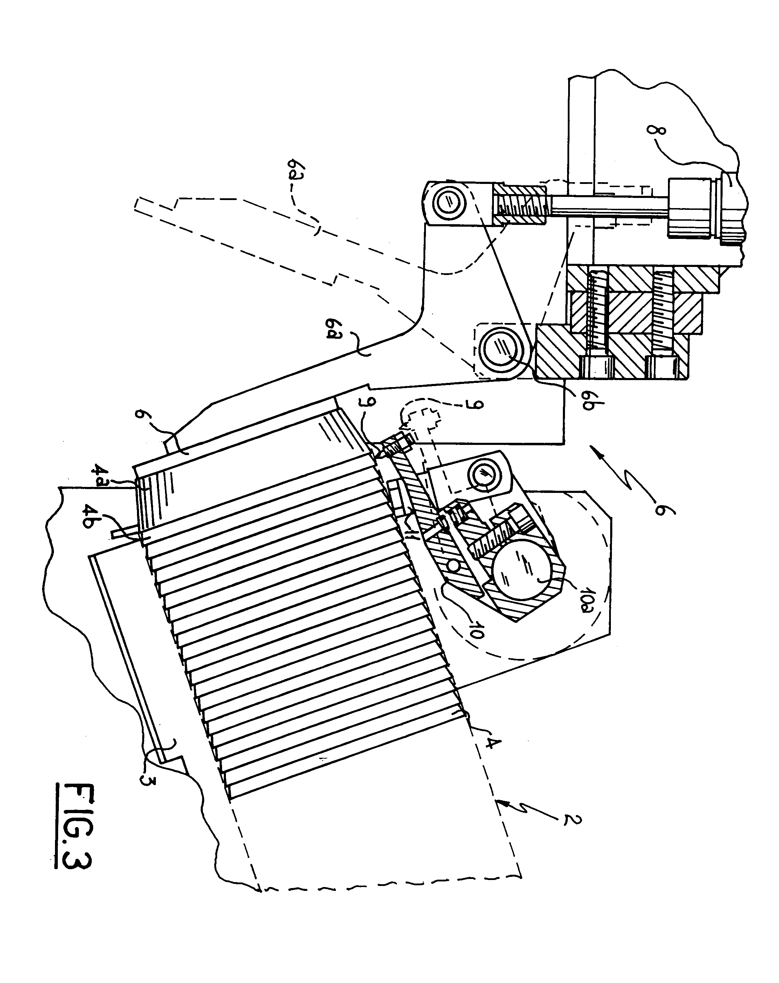

Arranged downstream of the storage magazine means 2 is a separating device 6 (Figs. 1 and 3) comprising a movable door 6a against which the lower pack 4a abuts, said pack being disposed in an underlying position relative to the packs contained in the same storage magazine means 2. The movable door 6a is mounted rotatably about a pivot pin 6b and driven in rotation by a first fluid operated cylinder 8. Also movable in synchronism with the door 6a is a needle element 9 supported by a rod 10 rotating about the axis 10a and driven in rotation by a second fluid-operated cylinder 11. The needle element 9 is adapted to penetrate laterally into a second pack of containers 4b located adjacent the lower pack 4a and at a higher position with respect to it.

The lower pack 4a withdrawn from the separating device falls under gravity, while keeping the container concavity facing upwardly, onto a support table 12 where it is acted upon by a transferring member 13 moved by a third fluid-operated cylinder 14 so as to urge said pack towards a withdrawing area 15 where an extractor device 16 is arranged (Figs. 1 and 2).

Said extractor device is comprised of a base block 17 on which the pack 4 of containers 5 is positioned by the transferring member 13. Movable in register with the base block 17 and over it in a vertical direction is an extractor body 18, substantially in the form of a pad and exhibiting a side wall 19 and a bottom wall (20) the shapes of which match the shape of a container 5. As the latter is generally of truncated conical or pyramidal form, the extractor body 18 as well is substantially a frusto-conical or frusto-pyramidal body.

In addition, the extractor body 18 exhibits, at a portion of the side wall 19, a side hollow 21 extending upwardly with increasing depth from the bottom wall 20. Connected to the extractor body 18 is first suction means 22 comprising suction channels disposed within the extractor body and formed with a first suction channel 23 exhibiting one suction mouth 23a located in register with the side hollow 21 and a second suction channel 24 joigning the first suction channel 23 and exhibiting second suction mouth 24a, located on the bottom wall 20 preferably at a location close to the side hollow 21.

Cooperating with the extractor body 18 is locking means adapted to hold downwardly the containers 5 disposed under said upper container.

Said locking means substantially consists of a tooth 7 positioned close to the side hollow 21 over a portion of the perimetric edge of the containers located under the upper container. Provision is also made for second suction means 25 formed in the base block 17 and comprising a third suction mouth 25a located at the upper part of the base block 17.

A pusher element 26 is arranged laterally of the base block 17 and adjacent the side hollow 21 during the step in which the extractor body 18 is positioned over the base block 17; said pusher element is driven by a fourth fluid-operated cylinder 27 which is movable horizontally so as to push into the side hollow 21 the container areas that are close thereto.

The extractor body 18 is engaged to a rod 28 provided with an inner duct 29 communicating at the lower part thereof with the first suction channel 23 and at the upper part thereof with an attachment 30 of a flexible hose 31 connected at the end to a vacuum unit 32.

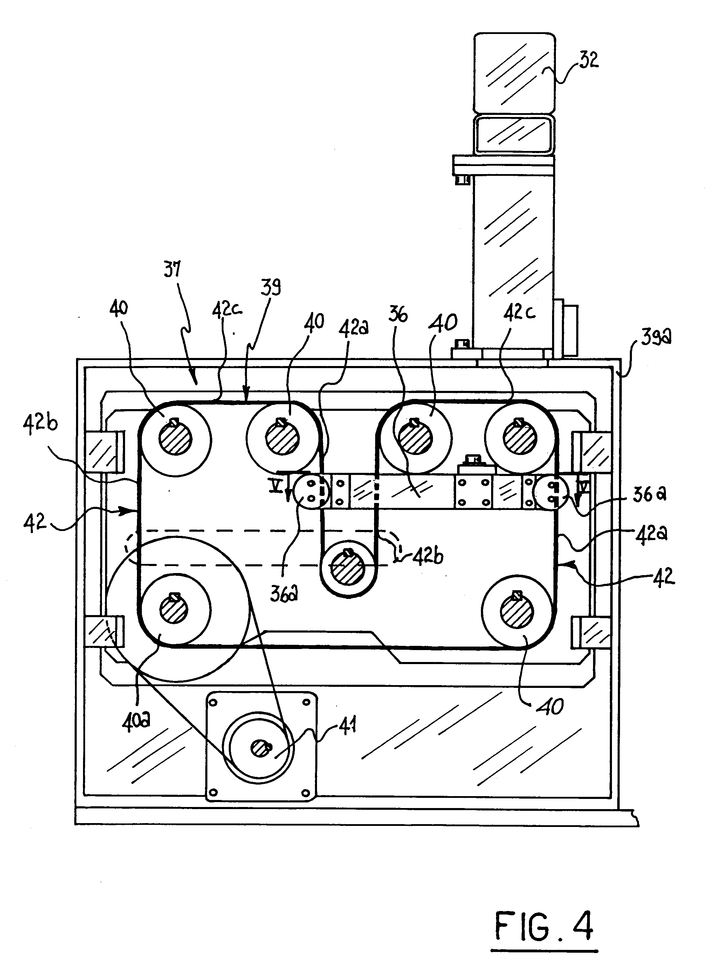

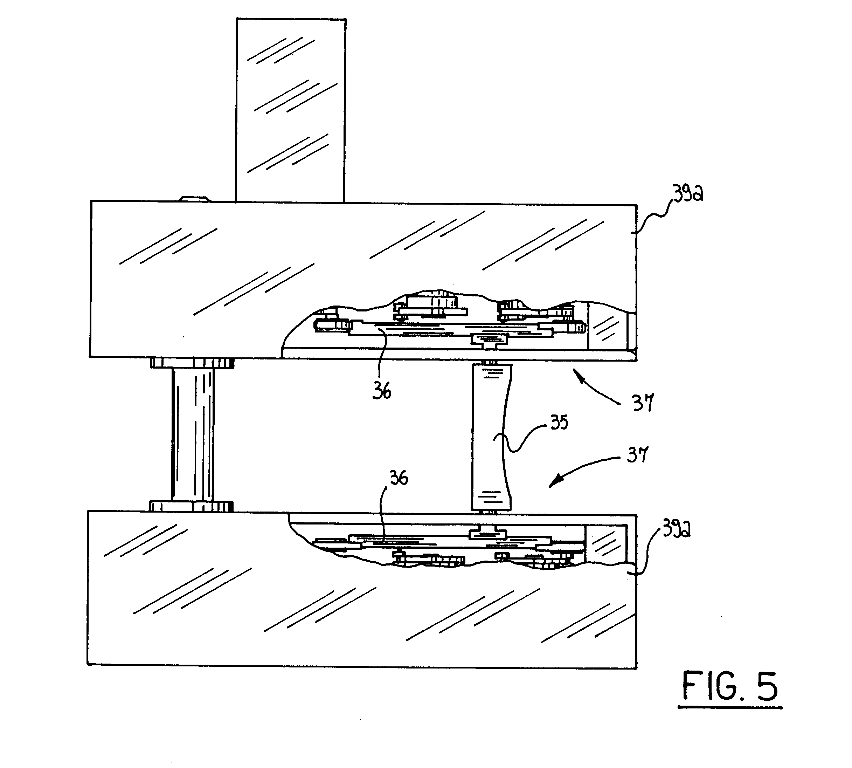

The rod 28 is slidable within a bush 33 and is elastically thrusted downwardly by a compensation spring 34. The bush 39 is engaged to a substantially rod-like support crosspiece 35 and linked at either end to two movable rods 36 disposed opposite each other. The support crosspiece 35 and movable rods 36 are part of a transferring means 37 diagrammatically shown in Figs. 4 and 5 which, acting upon the extractor body 18, enables each container 5 to be transferred from the withdrawing area 15 to an operating use area 38, while keeping the container concavity facing upwardly, that is without allowing the container to undergo any rotation.

The transferring means 37 comprises a pair of flexible drive members 39, chains for example, each disposed inside a gear casing 39a between which the support crosspiece is is interposed.

The flexible drive members 39 are supported by a plurality of pulleys or toothed wheels 40 two of which 40a are driving wheels, being moved by a motor 41 preferably of the stepping type. The toothed wheels 40 and each flexible drive element 39 define an endless path comprising two equal and consecutive tooth-shaped portions 42. Each tooth-shaped portion 42 is defined by an ascendent stretch 42a and a descending stretch 42b joined to each other by horizontal stretches 42c for example. The movable rod 36 is rotatably engaged, at its end portions 36a, to corresponding points of the two tooth-shaped portions 42. In this way the end portions 36a during motion of the flexible drive element 39 are engaged to points thereof provided with direct motion in the same way. The displacement of the movable rod 36 can therefore take place both in the vertical and the horizontal directions, said movable rod being however always oriented horizontally, so that the extractor body 18 connected thereto does not undergo any rotation.

Advantageously it is possible to provide several separating devices 6 and extractor devices 16 disposed in side by side relation, so that the withdrawing and transferring of a plurality of individual confectionery containers can be carried out simultaneously. In this case the transferring means 37 can be usefully employed in all working lines provided, thereby enabling all the extractor bodies 18 to be moved simultaneously.

Operation of the apparatus described above mainly as regards structure, is as follows.

After loading the storage magazine means 2 with confectionery containers 5 divided into packs 4 and having their convexity facing the movable door 6a, the separating device 6 by opening the movable door 6a makes the lower pack 4a come out of the storage magazine means, the remaining packs being held by the needle element 9 fitted in the pack 4b adjacent the lower pack: 4a. On closing the movable door 6a the second fluid operated cylinder 11 operates the disengagement of the needle element 9 from the pack 4b thereby making all packs slide downwardly and arranging said pack 4b at the separation position. The needle element 9 is fitted in the new pack taking the place of said pack 4b and the above described separation sequence is repeated periodically following the same modalities for all container packs disposed in the storage magazine means 2.

The withdrawn pack falls onto the support table is while keeping its concavity turned upwardly and the transferring member 13 puts it on the base block 17. The transferring means 37 lowers the extractor body 18 which enters from top the concavity of the upppermost container of the pack. The compensation spring 34 enables the bottom wall 20 of the extractor body 18 to remain in contact with the bottom of the upper container, irrespective of the thickness resulting from the various superposed containers gathered to form as pack.

Subsequently the pusher element 26 by exerting pressure from the outside on the containers' wall in the region of the side hollow 21, causes the containers 5 to be deformed thereby creating a recess therein. In synchronism with the movement of the pusher element 26, both the first 22 and second 25 suction means start operating. The first means 22 creates a suction cup effect both on the side wall of the upper container 5 and on the bottom wall thereof. Therefore the upper container forcibly adheres to the extractor body 18. The second suction means creates a suction cup effect on the outer bottom of the lower container 5 forming the pack which is therefore forcedly held against the base block 17.

Subsequently the pusher element 26 moves away from the side hollow 21 and the containers spontaneous resume the original shape, except for the upper one that is still in contact with the side hollow 21 under the action of the first suction means 22. The upper container is therefore partly separated from the other containers forming the pack%. At this point the upper container, by virtue of the upward movement imparted to the extractor body 18 by the transferring means 37, can be easily and completely separated from the underlying containers, held downwardly by the tooth 7 and suction means 25.

The tranferring means 37 after vertically shifting the extractor body 18 integral with the support crosspiece 35 along the ascendent stretches 42a, enables the extractor body 18 to be first moved horizontally along the horizontal stretches 42c and subsequently to be lowered to an operating area 38, the container being always maintained with its concavity falling upwardly. When the container 5 has reached a predetermined height as established by a given number of pulses from motor 41, it is separated from the extractor body 18 by operation reversal of the vacum unit 32 that, instead of performing a suction action, gives rise to an air jet from the first and second suction mouths 23a and 24a.

Subsequently the transferring means 37 brings the extractor body 18 back to the starting position, that is makes the latter penetrate the cavity of a new container 5 disposed on top of the pack 4 present on the base block 17. A new operating cycle can therefore begin.

The invention attains important advantages.

It is pointed out that the particular constructional form of the extractor body 18 enables a safe and reliable separation of each individual container from the remaining ones. In addition, since each container is transferred to a contact position with the separation body matching the shape of the container itself, it can keep a steady position as far as it reaches the operating use area thereby eliminating the drawbacks present in the known art.

With this system it is possible to use bun cases having broad side tolerances, in that the correct size situation is restored by the extractor body entering the bun case cavity and being completely embraced by said bun case by effect of the suction action.

It is also important to note that the particular embodiment shown is much more reliable than the embodiments offered by the known art because it enables large amounts of containers to be handled practically without any positionning error in the working line.

It is understood that modifications and variations may be made to the invention as conceived, all of them falling within the scope of the inventive idea.

**Claims**

1. An apparatus for taking a container at a time out of a stack of confectionery containers and feeding it to an operating area for use, comprising a magazine means (2) for storing said containers disposed to form stack and gathered in packs that are in turn stacked, a device (6) for separating each pack (4) of containers (5) from said storage magazine means (2), a transferring member (13) designed to transfer each pack (4) from said storage magazine means (2) to a withdrawing area (15) and an extractor device (16) designed to take out the containers (5) one at a time, characterized in that said extractor device (16) comprises an extractor body (18) exhibiting a side wall (19) and a bottom wall (20) the shapes of whith match the concavity of a container (5), said extractor body (18) being movable in a vertical direction and adapted to penetrate from top the concavity of the upper container (5) of said container pack (4), first air suction means (22) adapted to make said upper container (5) adhere by partial vacuum to said extractor body (18), locking means (7) adaptated to hold downwardly the containers (5) located under said upper container, and transferring means (37) for said upper container (5), acting on said extractor body (18) and designed to transfer said container (38) to an operating area (38) for use.

2. An apparatus according to claim 1, characterized in that said locking means comprises a tooth (7) positioned over a portion of the perimetric edge of the containers (5) located cinder said upper container, and second suction means (25) acting on the lower container (5) of said container pack (4).

3. An apparatus according to claim 1, characterized in that said first suction means (22) comprises suction channels (23, 24) formed within said extractor body (18) and exhibiting at least a bottom suction mouth (24a) and at least a side suction mouth (23a) disposed adjacent said bottom wall (20) and side wall (19) of said extractor body (18), respectively.

4. An apparatus according to claim 2, characterized in that said extractor body (18) has at least a side hollow (21) located at a portion of said side wall (19), said side suction mouth (24a) being positioned in register with said side hollow (21).

5. An apparatus according to claim 3, characterized in that said side hollow (21) extends upwardly with increasing depth from the bottom wall (20) of said extractor body.

6. An apparatus according to claim 1, characterized in that said separating device (6) comprises a movable door (6a) dispensed at the end of said storage magazine means (2) and a needle element (9) adapted to selectively hold the stack of said packs (4) and containers (5) by stopping the pack (4) disposed adjacent the lowermost one of said packs (4) in contact with said door (6a).

7. An apparatus according to claim 1, characterized in that said transferring means comprises:
   – at least a flexible drive element (39),
   – a plurality of support and idler wheels (40) for said flexible drive element (39), said wheels (40) and flexible drive element (39) defining an endless path comprising at least two equal and consecutive tooth-shaped portions (42), each tooth-shaped portion (42) being defined by an ascendent stretch (42a) and a defending stretch (42b) joined to each other,
   – at least a movable rod (36) rotatably engaged to corresponding points of said two tooth-shaped portions (42), and
   – motor (41) for driving at least one of said wheels.

FIG.1

FIG.2

FIG.3

FIG.4

FIG. 5

**European Patent Office**

# EUROPEAN SEARCH REPORT

Application Number

EP 92 83 0143

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 919 587 (YASUNORI TASHIRO) | 1 | B65G59/10 |
| A | * the whole document * | 6 | B65G59/04 |
| | --- | | |
| Y | US-A-3 090 523 (PERCIVAL JAMES PACKMAN) | 1 | |
| A | * the whole document * | 2-5 | |
| | --- | | |
| A | DE-B-2 519 563 (BRAUEREIMASCHINENFABRIK MAX KETTNER) * claims 1-7; figures * | 7 | |
| | ----- | | |
| | | | TECHNICAL FIELDS SEARCHED (Int. Cl.5) |
| | | | B65G |
| | | | B65B |

The present search report has been drawn up for all claims

| Place of search | Date of completion of the search | Examiner |
|---|---|---|
| THE HAGUE | 25 JUNE 1992 | VAN ROLLEGHEM F. |